(19) Europäisches Patentamt / European Patent Office / Office européen des brevets

(11) **EP 3 922 680 B1**

(12) **EUROPEAN PATENT SPECIFICATION**

(45) Date of publication and mention of the grant of the patent:
**18.05.2022 Bulletin 2022/20**

(21) Application number: **21189106.4**

(22) Date of filing: **28.09.2018**

(51) International Patent Classification (IPC):
**C08L 77/00** (2006.01)   **C08G 69/26** (2006.01)
**C08K 3/40** (2006.01)   **C08K 7/02** (2006.01)
**C08K 3/22** (2006.01)   **C08K 7/14** (2006.01)
**C08L 77/06** (2006.01)   **C08L 77/02** (2006.01)

(52) Cooperative Patent Classification (CPC):
(C-Sets available)
**C08G 69/26; C08K 3/22; C08K 3/40; C08K 7/14; C08L 77/02; C08L 77/06;** C08K 7/02      (Cont.)

(54) **THERMOPLASTIC RESIN COMPOSITION, RESIN MOLDING, METHOD FOR MANUFACTURING PLATED RESIN MOLDING, AND METHOD FOR MANUFACTURING PORTABLE ELECTRONIC DEVICE PART**

THERMOPLASTISCHE HARZZUSAMMENSETZUNG, HARZFORMTEIL, VERFAHREN ZUR HERSTELLUNG EINES PLATTIERTEN HARZFORMTEILS UND VERFAHREN ZUR HERSTELLUNG EINES TRAGBAREN ELEKTRONISCHEN VORRICHTUNGSTEILS

COMPOSITION DE RÉSINE THERMOPLASTIQUE, MOULAGE DE RÉSINE, PROCÉDÉ DE FABRICATION DE MOULAGE DE RÉSINE PLAQUÉE ET PROCÉDÉ DE FABRICATION D'UNE PIÈCE DE DISPOSITIF ÉLECTRONIQUE PORTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2017 JP 2017193468**

(43) Date of publication of application:
**15.12.2021 Bulletin 2021/50**

(62) Document number(s) of the earlier application(s) in accordance with Art. 76 EPC:
**18865101.2 / 3 670 605**

(73) Proprietor: **Mitsubishi Engineering-Plastics Corporation**
**Tokyo 105-0021 (JP)**

(72) Inventors:
• **YAMADA, Ryusuke**
  **Tokyo, 254-0016 (JP)**
• **HIWATASHI, Yuki**
  **Tokyo, 254-0016 (JP)**

(74) Representative: **Renkema, Jaap**
**IPecunia Patents B.V.**
**P.O. Box 593**
**6160 AN Geleen (NL)**

(56) References cited:
**US-A1- 2008 119 603**

EP 3 922 680 B1

(52) Cooperative Patent Classification (CPC): (Cont.)

C-Sets
**C08K 3/22;**
**C08K 3/40;**
**C08K 7/14;**
**C08L 77/02**

**Description**

TECHNICAL FIELD

This invention relates to a thermoplastic resin composition, a resin molding, a method for manufacturing a plated resin molding, and a method for manufacturing a portable electronic device part.

BACKGROUND ART

Crystalline thermoplastic resin excels in mechanical characteristics, as well as other physical and chemical characteristics, and has therefore been widely used for vehicle components, electric/electronic equipment components, and other precision equipment components.
Thermoplastic resin has also been blended with a variety of additives to acquire desired functions.
For example, Patent Literature 1 discloses a polyamide resin composition that contains (A) polyamide resin, (B) inorganic filler, and (C) carbon black, at least part of (A) polyamide resin being (a1) aromatic polyamide, and the (C) carbon black having an average primary particle size of 20 nm larger, and a specific surface area/DBP (dibuthyl phthalate) oil absorption, which is ratio of specific surface area and DBP oil absorption, of 1.0 or smaller.
Patent Literature 2 discloses a polyamide resin composition that contains 50% by mass or more of a polyamide resin (A) having a saturated water absorption, measured after immersion in water, of 4.0% by mass or smaller, and contains, per 100 parts by mass of the polyamide resin component, 20 to 150 parts by mass of a glass fiber, and, 1 to 30 parts by mass of a laser direct structuring additive. US2008119603 discloses a mobile telephone housing, comprising a polyamide composition comprising, (A) about 25 to about 67 weight percent of at least one polyamide; (B) about 30 to about 65 weight percent of one or more reinforcing agents comprising (i) glass fibers, and (ii) glass flakes, wherein the weight ratio of fibers (i) to flakes (ii) is between about 1:6 to about 6:1; and (C) about 3 to about 20 weight percent of one or more impact modifiers; wherein the weight percentages of (a) and (b) are based on the total weight of (a)+(b) and the weight percentages of (A), (B), and (C) are based on the total weight of (A)+(B)+(C), and the composition has a tensile modulus greater than or equal to about 9 GPa, as measured by ISO 527-1/2.

CITATION LIST

PATENT LITERATURE

[Patent Literature 1] JP-A-2017-014388
[Patent Literature 2] JP-A-2015-048440

SUMMARY OF THE INVENTION

TECHNICAL PROBLEM

A variety of thermoplastic resin compositions have been known as described above. Efforts for maintaining the mechanical strength at high levels were however found to occasionally increase warp after heating. It is therefore an object of this invention to solve this problem, and to provide a thermoplastic resin composition capable of yielding a resin molding well suppressed from warping after heating, while successfully maintaining high mechanical strength, and such resin molding.
Meanwhile, laser direct structuring (occasionally be referred to as "LDS", hereinafter) technique has attracted attention in recent years, as one of a technique for manufacturing a three-dimensional antenna. LDS is a technique for forming a plating layer, typically by irradiating laser on the surface of a resin molding that contains an LDS additive, to thereby activate the irradiated area, and by applying a metal to the thus activated area. However due to usually high hardness of the LDS additive, a reinforcing fiber when compounded in the composition would be damaged, thereby degrading the mechanical strength of the obtainable resin molding. Also such resin molding is required to be suppressed from warping after heating.
It is therefore a second object of this invention to solve the aforementioned problem also in the LDS technique relying upon blending with the LDS additive, and to provide a thermoplastic resin composition capable of yielding a resin molding on which a plating layer can be formed, and, well suppressed from warping after heating while successfully maintaining high mechanical strength, such resin molding, and methods for manufacturing a plated resin molding and a portable electronic device part.

SOLUTION TO PROBLEM

The present inventors conducted diligent research to address the above-mentioned problems, and as a result, discovered that the above problems could be solved by blending a glass flake the reinforcing fiber and thickness of which fall inside the predetermined range as a reinforcing filler according to predetermined blend ratios.

Specifically, the problems described above are solved by the following means <1>, and preferably by the following means <2> to <22>.

<1> A thermoplastic resin composition containing 10 to 100 parts by mass of a reinforcing filler, per 100 parts by mass of a crystalline thermoplastic resin, wherein the crystalline thermoplastic resin contains a polybutylene terephthalate resin and/or a polyamide resin; wherein the reinforcing filler contains a reinforcing fiber and a glass flake having a thickness of 0.1 to 2 $\mu$m; and the reinforcing fiber/glass flake, which is mass ratio of the reinforcing fiber and the glass flake, falls into 0.1 to 1; and the polybutylene terephthalate resin and the polyamide resin account for 85% by mass or more, preferably 90% by mass or more, even more preferably 95% by mass or more, of a resin component contained in the thermoplastic resin composition.

<2> The thermoplastic resin composition of <1>, wherein the crystalline thermoplastic resin contains a polyamide resin.

<3> The thermoplastic resin composition of <2>, wherein the polyamide resin is a semi-aromatic polyamide resin.

<4> The thermoplastic resin composition of <2>, wherein the polyamide resin is composed of a diamine-derived structural unit and a dicarboxylic acid-derived structural unit, 50 mol% or more of the diamine-derived structural unit is derived from xylylenediamine, and 50 mol% or more of the dicarboxylic acid-derived structural unit is derived from a straight chain aliphatic $\alpha,\omega$-dicarboxylic acid having 4 to 20 carbon atoms.

<5> The thermoplastic resin composition of <4>, wherein 50 mol% or more of the dicarboxylic acid-derived structural unit is derived from sebacic acid.

<6> The thermoplastic resin composition of <4> or <5>, wherein 50 mol% or more of the diamine-derived structural unit is derived from paraxylylenediamine.

<7> The thermoplastic resin composition of <4>, wherein 70 mol% or more of the dicarboxylic acid-derived structural unit is derived from sebacic acid, and 70 mol% or more of the diamine-derived structural unit is derived from paraxylylenediamine.

<8> The thermoplastic resin composition of any one of <2> to <7>, wherein 90% by mass or more of the polyamide resin is a polyamide resin having a saturated water absorption, measured after immersion in water, of 4.0% by mass or smaller.

<9> The thermoplastic resin composition of any one of <1> to <8>, wherein the reinforcing fiber contains a glass fiber.

<10> The thermoplastic resin composition of any one of <1> to <9>, further containing 0.1 to 20 parts by mass of talc, per 100 parts by mass of the crystalline thermoplastic resin.

<11> The thermoplastic resin composition of any one of <1> to <10>, further containing at least one selected from the group consisting of a flame retarder, a light stabilizer, a heat stabilizer, an alkali, an elastomer, a titanium oxide, an antioxidant, a hydrolysis resistance modifier, a matting agent, a UV absorber, nucleating agent, a plasticizer, a dispersion aid, an antistatic agent, am anti-coloring agent, and a colorant.

<12> A resin molding formed of the thermoplastic resin composition described in any one of Claims <1> to <11>.

<13> The thermoplastic resin composition of <2>, wherein the polyamide resin is a terephthalate-based polyamide resin, and/or xylylenediamine-based polyamide resin.

<14> A resin molding formed of the thermoplastic resin composition described in any one of <1> to <12>.

ADVANTAGEOUS EFFECTS OF INVENTION

This invention made it possible to provide a thermoplastic resin composition capable of yielding a resin molding well suppressed from warping after heating, while successfully maintaining high mechanical strength, and such resin molding. This invention also made it possible to provide a thermoplastic resin composition, even if blended with an LDS additive, capable of yielding a resin molding on which a plating layer can be formed, and, well suppressed from warping after heating while successfully maintaining high mechanical strength, such resin molding, and methods for manufacturing a plated resin molding and a portable electronic device part.

BRIEF DESCRIPTION OF DRAWINGS

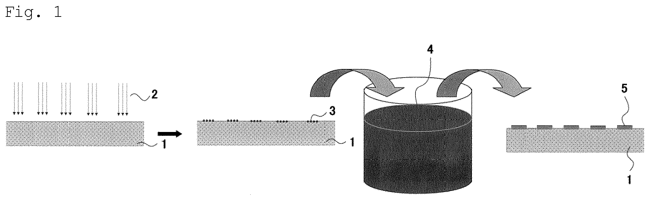

[FIG. 1] A schematic drawing illustrating a step of providing a plating layer on the surface of a resin molding.

DESCRIPTION OF EMBODIMENTS

This invention will be detailed below. Note that all numerical ranges given in this patent specification, using "to" preceded and succeeded by numerals, are used to represent the ranges including these numerals respectively as the lower and upper limit values.

The thermoplastic resin composition of this invention (occasionally referred to as "resin composition of this invention", hereinafter) is unique in that it contains 10 to 100 parts by mass of a reinforcing filler, per 100 parts by mass of the crystalline thermoplastic resin, the reinforcing filler containing a reinforcing fiber and a glass flake having a thickness of 0.1 to 2 $\mu$m, with reinforcing fiber/glass flake, which is mass ratio of the reinforcing fiber and the glass flake, adjusted to 0.1 to 1.

With such structure, the resin molding is effectively suppressed from warping after heating, while successfully maintaining high mechanical strength. In addition, the resin molding, even if blended with an LDS additive, allows a plating layer formed thereon, while effectively achieving the aforementioned effects.

This invention will be detailed below.

<Crystalline Thermoplastic Resin>

The resin composition of this invention contains a crystalline thermoplastic resin. The crystalline thermoplastic resin is exemplified by polyamide resin, polyacetal resin, and polybutylene terephthalate resin, among which polyamide resin and polybutylene terephthalate resin are preferred, and polyamide resin is more preferable. The crystalline polyamide resin, when used, can cure the resin molding more rapidly, and therefore also can produce irregularity on the surface of the resin molding more efficiently. This makes it possible to further improve adhesiveness between the resin molding and the plating layer.

In the resin composition of this invention, the crystalline thermoplastic resin preferably accounts for 30% by mass or more, which is more preferably 35% by mass or more, even more preferably 40% by mass or more, and yet more preferably 50% by mass or more. The upper limit value of the content of crystalline thermoplastic resin in the resin composition is preferably 80% by mass or below, more preferably 75% by mass or below, even more preferably 70% by mass or below, and yet may be 65% by mass or below.

The resin composition of this invention may contain only one kind of crystalline thermoplastic resin, or two or more kinds thereof. When two or more kinds are contained, the total content preferably falls within the aforementioned ranges.

«Polyamide Resin»

The polyamide resin used in this invention is selectable from any of known polyamide resins without special limitation. Regarding such polyamide resin, the description in paragraphs [0011] to [0013] of JP-A-2011-132550 may be referred to.

The polyamide resin used in this invention is preferably a semi-aromatic polyamide resin. Now, the semi-aromatic polyamide resin means a resin composed of a diamine-derived structural unit and a dicarboxylic acid-derived structural unit, in which an aromatic ring-containing structural unit accounts for 30 to 70 mol% of the total of the diamine-derived structural unit and dicarboxylic acid-derived structural unit. The aromatic ring-containing structural unit preferably accounts for 40 to 60 mol% of the total of the diamine-derived structural unit and dicarboxylic acid-derived structural unit. Use of such semi-aromatic polyamide resin can enhance the mechanical strength of the obtainable resin molding. The semi-aromatic polyamide resin is exemplified by terephthalate-based polyamide resin (polyamide 6T, polyamide 9T), and xylylenediamine-based polyamide resin described later.

At least one kind of the polyamide resin used in this invention is preferably composed of a diamine-derived structural unit and a dicarboxylic acid-derived structural unit, with 50 mol% or more of the diamine-derived structural unit being derived from xylylenediamine, and with 50 mol% or more of the dicarboxylic acid-derived structural unit being derived from a straight chain aliphatic $\alpha,\omega$-dicarboxylic acid having 4 to 20 carbon atoms (occasionally referred to as "xylylenediamine-based polyamide resin", hereinafter).

Preferably 70 mol% or more, more preferably 80 mol% or more, even more preferably 90 mol% or more, and yet more preferably 95 mol% or more of the diamine-derived structural unit of the xylylenediamine-based polyamide resin is derived from xylylenediamine. More preferably 70 mol% or more, even more preferably 80 mol% or more, yet more preferably 90 mol% or more, and furthermore preferably 95 mol% or more of the dicarboxylic acid-derived structural unit of the xylylenediamine-based polyamide resin is derived from straight chain aliphatic $\alpha,\omega$-dicarboxylic acid having 4 to 20 carbon atoms.

The xylylenediamine is preferably paraxylylenediamine and metaxylylenediamine, and preferably contains at least paraxylylenediamine.

A referred embodiment of the xylylenediamine-based polyamide resin in this invention is exemplified by a product, with 50 mol% or more (preferably 70 mol% or more, and more preferably 90 mol% or more) of the diamine-derived structural unit being derived from paraxylylenediamine.

Diamines employable as a starting diamine component of the xylylenediamine-based polyamide resin, but other than metaxylylenediamine and paraxylylenediamine, are exemplified by aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic ring(s) such as bis(4-aminophenyl)ether, paraphenylenediamine, and bis(aminomethyl)naphthalene, from which one kind may be used, or two or more kinds may be used in a mixed manner.

The straight chain aliphatic $\alpha,\omega$-dicarboxylic acid having 4 to 20 carbon atoms, suitably used as the starting dicarboxylic acid component for the xylylenediamine-based polyamide resin, is exemplified by aliphatic dicarboxylic acids such as succinic acid, glutaric acid, pimelic acid, suberic acid, azelaic acid, adipic acid, sebacic acid, undecanedioic acid, and dodecanedioic acid, from which one kind may be used, or two or more kinds may be used in a mixed manner. Among them, adipic acid or sebacic acid is more preferable since the polyamide resin will have melting point suitable for molding process, and sebacic acid is even more preferable.

As one preferred embodiment of the xylylenediamine-based polyamide resin in this invention, exemplified is the one with 50 mol% or more (preferably 70 mol% or more, and more preferably 90 mol% or more) of the dicarboxylic acid-derived structural unit being derived from sebacic acid.

As another preferred embodiment of the xylylenediamine-based polyamide resin in this invention, exemplified is a blend of a polyamide resin with 50 mol% or more (preferably 70 mol% or more, and more preferably 90 mol% or more) of the dicarboxylic acid-derived structural unit being derived from sebacic acid, and a polyamide resin with 50 mol% or more (preferably 70 mol% or more, and more preferably 90 mol% or more) of the dicarboxylic acid-derived structural unit being derived from adipic acid.

The dicarboxylic acid component other than the straight chain aliphatic $\alpha,\omega$-dicarboxylic acid having 4 to 20 carbon atoms is exemplified by phthalic acid compounds such as isophthalic acid, terephthalic acid, and orthophthalic acid; and isomers of naphthalenedicarboxylic acid such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, from which one kind may be used, or two or more kinds may be used in a combined manner.

The resin composition, containing the diamine-derived structural unit and the dicarboxylic acid-derived structural unit as the major ingredients, does not totally exclude any other structural units, and may of course contain structural units derived from lactams such as $\varepsilon$-caprolactam and laurolactam; or from aliphatic aminocarboxylic acids such as aminocaproic acid and aminoundecanoic acid. Now the major ingredient means that the total number of the diamine-derived structural unit and the dicarboxylic acid-derived structural unit accounts for the largest percentage among all structural units composing the xylylenediamine-based polyamide resin. In this invention, the total number of the diamine-derived structural unit and the dicarboxylic acid-derived structural unit preferably accounts for 90% or more among all structural units composing the xylylenediamine-based polyamide resin, which is more preferably 95% or more.

As one embodiment of a blend of polyamide resins in this invention, also exemplified is a blend of the xylylenediamine-based polyamide resin and a terephthalic acid-based polyamide resin.

In the resin composition of this invention, 90% by mass or more of the polyamide resin contained in the composition has a saturated water absorption, measured after immersion in water, of 4.0% by mass or smaller. By employing such polyamide resin, the resin molding after molded will cause only a small dimensional change due to water absorption, on which a plating layer may be formed suitably, and will maintain adhesiveness between the plating layer and the resin molding even after saturation in water or after heating/cooling. The polyamide resin (A) used in this invention preferably has a saturated water absorption of 3.5% by mass or smaller, which is more preferably 2.5 to 3.3% by mass.

The saturated water absorption is measured according to a method explained later in EXAMPLE.

The polyamide resin preferably has a melting point of 150 to 350°C, which is more preferably 180 to 330°C, even more preferably 200 to 330°C, and yet more preferably 200 to 320°C.

The melting point is measured according to a method described later in EXAMPLE.

The polyamide resin preferably has a number-average molecular weight (Mn) of 6,000 or larger at minimum, which is more preferably 8,000 or larger, even more preferably 10,000 or larger, yet more preferably 15,000 or larger, furthermore preferably 20,000 or larger, and again furthermore preferably 22,000 or larger. The upper limit of Mn is preferably 35,000 or smaller, more preferably 30,000 or smaller, even more preferably 28,000 or smaller, and yet more preferably 26,000 or smaller. Within these ranges, heat resistance, elastic modulus, dimensional stability, and moldability will be more improved.

An embodiment of the resin composition of this invention is exemplified by the one that is substantially free of thermoplastic resin other than the polyamide resin. "Substantially free of ..." means that the content of the thermoplastic resin other than the polyamide resin is preferably 5% by mass or less of the resin composition of this invention, which is more preferably 3% by mass or less, and even more preferably 1% by mass or less.

«Polybutylene Terephthalate Resin»

The polybutylene terephthalate resin used for the resin composition of this invention is a polyester resin structured by combining a terephthalic acid unit and a 1,4-butanediol unit through an ester bond, and contains not only polybutylene terephthalate resin (homopolymer), but also polybutylene terephthalate copolymer that contains a copolymerizable component other than terephthalic acid unit and 1,4-butanediol unit, as well as mixture of the homopolymer and such copolymer.

The polybutylene terephthalate resin may contain a dicarboxylic acid unit other than terephthalic acid, where such other the dicarboxylic acid is specifically exemplified by aromatic dicarboxylic acids such as isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracenedicarboxylic acid, and 4,4'-diphenyl ether dicarboxylic acid; alicyclic dicarboxylic acids such as 1,4-cyclohexanedicarboxylic acid, and 4,4'-dicyclohexyl dicarboxylic acid; and aliphatic dicarboxylic acids such as adipic acid, sebacic acid, azelaic acid, and dimer acid.

The diol unit to be contained may be a diol unit other than 1,4-butanediol, where such other diol unit is specifically exemplified by aliphatic or alicyclic diols having 2 to 20 carbon atoms, and bisphenol derivatives. Specific examples include, ethylene glycol, propylene glycol, 1,5-pentanediol, 1,6-hexanediol, neopentyl glycol, decamethylene glycol, cyclohexanedimethanol, 4,4'-dicyclohexyl hydroxymethane, 4,4'-dicyclohexyl hydroxypropane, and ethylene oxide adduct diol of bisphenol A. Besides the aforementioned bifunctional monomers, it is also acceptable to employ a small amount of trifunctional monomer such as trimellitic acid, trimesic acid, pyromellitic acid, pentaerythritol, and trimetylolpropane in order to introduce a branched structure; or monofunctional compound such as fatty acid in order to control the molecular weight.

The amount of copolymerization of such other diol unit, besides 1,4-butanediol, is preferably 1 mol% or more and less than 50 mol% of all segments of the polybutylene terephthalate resin. In particular, the amount of copolymerization is preferably 2 mol% or more and less than 50 mol%, more preferably 3 to 40 mol%, and particularly 5 to 20 mol%.

The polybutylene terephthalate resin, which is preferably a polybutylene terephthalate homopolymer obtained by polycondensing terephthalic acid with 1,4-butanediol, may alternatively a polybutylene terephthalate copolymer that contains as the carboxylic acid unit one or more kinds of dicarboxylic acid other than terephthalic acid, and/or, as the diol unit one or more kinds of diol other than 1,4-butanediol.

The polybutylene terephthalate resin may be manufactured by melt-polymerizing the dicarboxylic acid component mainly composed of terephthalic acid or ester derivative thereof, with the diol component mainly composed of 1,4-butanediol, according to a batch process or continuous process. Now the dicarboxylic acid component mainly composed of terephthalic acid means that terephthalic acid accounts for the largest percentage of content in the dicarboxylic acid. Terephthalic acid preferably accounts for 70 mol% or more, more preferably 80 mol% or more, and even more preferably 90 mol% or more. Meanwhile, the diol component mainly composed of 1,4-butanediol means that 1,4-butanediol accounts for the largest percentage of content in the diol component. 1,4-Butanediol preferably accounts for 70 mol% or more, more preferably 80 mol% or more, and even more preferably 90 mol% or more.

The polybutylene terephthalate resin of low molecular weight, obtained by melt-polymerization, may further be polymerized in solid phase under nitrogen gas flow or under reduced pressure, so as to increase the degree of polymerization (or molecular weight) up to a desired value.

The polybutylene terephthalate resin is preferably obtained by a manufacturing method that allows the dicarboxylic acid component mainly composed of terephthalic acid and the diol component mainly composed of 1,4-butanediol to melt-polymerize according to a continuous system.

Any of known catalysts may be employed to proceed the esterification reaction, which are exemplified by titanium compound, tin compound, magnesium compound, and calcium compound. Among them, particularly preferred is titanium compound. Such titanium compound as the esterification catalyst is specifically exemplified by titanium alcoholates such as tetramethyl titanate, tetraisopropyl titanate and tetrabutyl titanate; and titanium phenolate such as tetraphenyl titanate.

The polybutylene terephthalate resin may also be modified by copolymerization. Specific examples of such preferred copolymer include polyalkylene glycols, which are particularly exemplified by polytetramethylene glycol-copolymerized polyester-ether resin, dimer acid-copolymerized polybutylene terephthalate resin, and isophthalate-copolymerized polybutylene terephthalate resin, among which isophthalate-copolymerized polybutylene terephthalate resin is preferred. Note that these copolymers are featured by an amount of copolymerization of 1 mol% or more, and less than 50 mol% among all segments of the polybutylene terephthalate resin. In particular, the amount of polymerization is preferably 2 to 50 mol%, more preferably 3 to 40 mol%, and particularly 5 to 20 mol%.

In particular, the copolymer, when used as the polybutylene terephthalate resin, is preferably a polyester-ether resin copolymerized with polytetramethylene glycol. Percentage of the tetramethylene glycol in the copolymer is preferably 3 to 40% by mass, more preferably 5 to 30% by mass, and even more preferably 10 to 25% by mass. With the percentage of copolymerization controlled within these ranges, the fluidity, toughness and tracking resistance will be more likely to improve fortunately.

The polybutylene terephthalate resin may have a suitably selected amount of terminal carboxyl group, which is usually 60 eq/ton or less, more preferably 50 eq/ton or less, and even more preferably 30 eq/ton or less. Above 50 eq/ton, the resin composition tends to produce gas during melt-molding. The lower limit value of the content of terminal carboxy group is typically, but not specifically limited to, 10 eq/ton taking the productivity during manufacturing of the polybutylene terephthalate resin into consideration.

The content of terminal carboxy group of the polybutylene terephthalate resin is measured by dissolving 0.5 g of polyalkylene terephthalate resin into 25 mL of benzyl alcohol, followed by titration using a 0.01 mol/l sodium hydroxide solution in benzyl alcohol. The content of terminal carboxy group may be controlled by any of known methods that are freely selectable, including a method based on modification of polymerization conditions such as feed ratio of starting materials, polymerization temperature, and evacuation method, and a method based on reaction with a terminal blocking agent.

The polybutylene terephthalate resin preferably has an intrinsic viscosity of 0.5 to 2 dL/g. The intrinsic viscosity more preferably falls in the range from 0.6 to 1.5 dL/g, taking the moldability and mechanical characteristics into consideration. With the intrinsic viscosity smaller than 0.5 dL/g, the obtainable resin composition will tend to degrade the mechanical strength. Meanwhile with the intrinsic viscosity exceeding 2 dL/g, the resin composition would have low fluidity and degraded moldability.

Note that the intrinsic viscosity of the polybutylene terephthalate resin is measured in a 1:1 (w/w) mixed solvent of tetrachloroethane and phenol, at 30°C.

One embodiment of the resin component in the resin composition of this invention is exemplified by a mode in which the polybutylene terephthalate resin and the polyamide resin account for 85% by mass or more (preferably 90% by mass or more, and even more preferably 95% by mass or more) of the resin component.

In the aforementioned embodiment, ratio of the polybutylene terephthalate resin and the polyamide resin is preferably determined so that the polybutylene terephthalate resin accounts for 50 to 70% by mass of the total, and the polyamide resin accounts for 50 to 30% by mass of the total.

In the aforementioned embodiment, the polybutylene terephthalate resin preferably contains 70 to 30% by mass of a polybutylene terephthalate resin formed from a dicarboxylic acid component mainly composed of terephthalic acid or an ester derivative thereof, and a diol component mainly composed of 1,4-butanediol; and 30 to 70% by mass of a modified polybutylene terephthalate resin (where, the total will not exceed 100% by mass) . The polybutylene terephthalate resin more preferably contains 60 to 40% by mass of a polybutylene terephthalate resin formed from a dicarboxylic acid component mainly composed of terephthalic acid or an ester derivative thereof, and a diol component mainly composed of 1,4-butanediol; and 40 to 60% by mass of a modified polybutylene terephthalate resin.

In the aforementioned embodiment, the polyamide resin is preferably an aliphatic polyamide resin, wherein polyamide 6 and polyamide 66 are preferred, and polyamide 6 is more preferred.

<Reinforcing Filler>

The resin composition of this invention contains 10 to 100 parts by mass of a reinforcing filler, per 100 parts by mass of the crystalline thermoplastic resin. The reinforcing filler preferably accounts for 20 parts by mass or more, per 100 parts by mass of the crystalline thermoplastic resin, which is more preferably 30 parts by mass or more, even more preferably 35 parts by mass or more, and yet more preferably 40 parts by mass or more. Meanwhile, the reinforcing filler preferably accounts for 90 parts by mass or less, per 100 parts by mass of the crystalline thermoplastic resin, which is more preferably 80 parts by mass or less, even more preferably 75 parts by mass or less, and even may be 70 parts by mass or less.

The reinforcing filler preferably accounts for 10 to 45% by mass of the resin composition of this invention, which is more preferably 15 to 40% by mass, and even may be 20 to 30% by mass.

The resin composition of this invention may contain only one kind of the reinforcing filler, or may contain two or more kinds. When two or more kinds are contained, the total content preferably falls within the aforementioned ranges.

In the resin composition of this invention, the reinforcing filler preferably has reinforcing fiber/glass flake, which is mass ratio of the reinforcing fiber and the glass flake having a thickness of 0.1 to 2 $\mu$m, adjusted to 0.1 to 1. The mass ratio is preferably 0.2 or larger, more preferably 0.3 or larger, even more preferably 0.4 or larger, and yet more preferably 0.45 or larger.

The resin composition of this invention may contain only one kind each of the reinforcing fiber and the glass flake having a thickness of 0.1 to 2 μm, or may contain two or more kinds each. When two or more kinds each are contained, the total content preferably falls within the aforementioned ranges.

The resin composition of this invention may contain, or may be free of, other reinforcing filler besides the reinforcing fiber and the glass flake having a thickness of 0.1 to 2 μm.

Such other reinforcing filler is exemplified by inorganic filler having scaly, spherical or needle-like form, whose ingredient is exemplified by glass, metal oxide, metal hydroxide, carbonate and sulfate.

One embodiment of the resin composition of this invention is exemplified by a resin composition substantially free of any other reinforcing filler besides the reinforcing fiber and the glass flake having a thickness of 0.1 to 2 μm. Now "substantially free of ..." means that the content of such reinforcing filler, besides the reinforcing fiber and the glass flake having a thickness of 0.1 to 2 μm, is 5% by mass or less of the total amount of reinforcing filler contained in the resin composition, which is more preferably 3% by mass or less, and even more preferably 1% by mass or less.

Note that the reinforcing filler in this invention is defined to exclude any substance that corresponds to the LDS additive, and, talc.

«Reinforcing Fiber»

The resin composition of this invention contains the reinforcing fiber. The reinforcing fiber is exemplified by carbon fiber and glass fiber, wherein glass fiber is preferably contained.

The reinforcing fiber in this invention means a fibrous inorganic material, and more specifically, a bundle of 1,000 to 10,000 reinforcing fibers preferably sized and chopped into a predetermined length.

The reinforcing fiber in this invention preferably has a number-average fiber length of 0.5 to 10 mm, and more preferably 1 to 5 mm. With the reinforcing fiber having such number-average fiber length, the mechanical strength may further be improved. The number-average fiber length is determined by randomly selecting the reinforcing fibers to be measured regarding fiber length, on an image observed under an optical microscope, and by measuring the length of their long sides, and then by averaging the obtained measurement values. Magnification of observation is set to 20×, and the number of observed fibers is set to 1,000 or more. The number-average fiber length approximately agrees with the cut length.

The reinforcing fiber may have cross section in the form of circle, ellipse, oblong circle, rectangle, rectangle sided on both short sides by semicircles, or cocoon. Circle form is preferred. "Circle" in this context means not only mathematically defined circle, but also shapes that are commonly considered to be circle in the technical field to which this invention belongs.

The reinforcing fiber preferably has a number-average fiber diameter of 4.0 μm or larger at minimum, which is more preferably 4.5 μm or larger, and even more preferably 5.0 μm or larger. Meanwhile, the reinforcing fiber preferably has a number-average fiber diameter of 15.0 μm or smaller at maximum, which is more preferably 14.0 μm or smaller, and even may be 12.0 μm or smaller. With the reinforcing fiber whose number-average fiber diameter is controlled within the aforementioned ranges, the obtainable resin molding will have improved platability even after heat-moisture treatment. Such resin molding can also maintain excellent platability even after long-term storage or long-term heat treatment. Note that the number-average fiber diameter of the reinforcing fiber is determined by randomly selecting the glass fibers to be measured regarding fiber diameter, on an image observed under an electron microscope, and by measuring the diameter at near-center part of the fibers, and then by averaging the obtained measurement values. Magnification of observation is set to 1,000×, and the number of observed fibers is set to 1,000 or more. The number-average fiber diameter of any glass fiber, having non-circular cross section, is given by number-average fiber diameter of a circle assumed to have the same area with such cross section.

Next, the glass fiber suitably used in this invention will be explained.

The glass fiber employed here is obtainable without special limitation from any kinds of glass that can be melt-spun into glass fiber, including fibers melt-spun from commonly marketed E-glass (electrical glass), C-glass (chemical glass), A-glass (alkali glass), S-glass (high strength glass), and alkali resistant glass. E-glass is preferably contained in this invention.

The glass fiber used in this invention is preferably treated on the surface, typically with a surface treatment agent such as silane coupling agent, which is exemplified by γ-methacryloxypropyl trimethoxysilane, γ-glicidoxypropyl trimethoxysilane, and γ-aminopropyl triethoxysilane. Amount of adhesion of the surface treatment agent is preferably 0.01 to 1% by mass of the glass fiber. If necessary, optionally employable are glass fibers having surfaces treated with lubricants such as fatty acid amide compound and silicone oil; anti-static agent such as quaternary ammonium salt; film-forming resins such as epoxy resin and urethane resin; and a mixture of the film-forming resin and heat stabilizer, flame retardant or the like.

The glass fiber is commercially available. Commercially available products are exemplified by T-286H, T-756H and T-289H from Nippon Electric Glass Co., Ltd.; DEFT2A from Owens Corning Corporation; HP3540 from PPG Industries; and CSG3PA820 from Nitto Boseki Co., Ltd.

«Glass Flake»

The resin composition of this invention contains a glass flake having a thickness of 0.1 to 2 $\mu$m. The thickness of glass flake means average thickness. The thickness of glass flake is preferably 0.3 $\mu$m or larger, more preferably 0.4 $\mu$m or larger, even more preferably 0.5 $\mu$m or larger, and yet more preferably 0.6 $\mu$m or larger. Meanwhile, the thickness of glass flake is preferably 1.8 $\mu$m or smaller, more preferably 1.6 $\mu$m or smaller, even more preferably 1.4 $\mu$m or smaller, yet more preferably 1.2 $\mu$m or smaller, furthermore preferably 1.0 $\mu$m or smaller, and again furthermore preferably 0.8 $\mu$m or smaller. The average thickness may be measured by the method below. That is, 100 or more glass flakes are observed under a scanning electron microscope (SEM) to individually measure the thickness, and the measured values are then averaged. A sample stage of the scanning electron microscope is controlled using a sample stage fine adjustor, so as to align a cross section (thickness-wise face) of the glass flake normal to the axis of irradiation of electron beam of the scanning electron microscope.

A variety of glass compositions, represented by A-glass, C-glass and E-glass, are applicable to the glass flake without special limitation.

<Laser Direct Structuring (LDS) Additive>

The resin composition of this invention contains the laser direct structuring (LDS) additive. The LDS additive in this invention is defined by a compound, which allows the resin composition to have the plating layer formed thereon, when 10 parts by mass of such additive, supposed to be an LDS additive, is added to 100 parts by mass of the crystalline thermoplastic resin, the composition is irradiated by a 1064-nm YAG laser at an output of 10 W, a frequency of 80 kHz, and a scanning speed of 3 m/s, and then subjected to electroless plating using M-Copper 85 plating bath from MacDermid, Inc. so as to apply a metal to the laser-irradiated face. The LDS additive used in this invention may be a synthetic product or may be a commercially available product. The commercially available product is not always necessarily the product sold as the LDS additive, but also may be the product sold for other purposes, so long as it satisfies essential features of the LDS additive in this invention. Only one kind of LDS additive may be used, or two or more kinds may be used in a combined manner.

A first embodiment of the LDS additive used in this invention relates to a compound that contains copper and chromium. The LDS additive of the first embodiment preferably contains 10 to 30% by mass of copper, and also preferably contains 15 to 50% by mass of chromium. The LDS additive of the first embodiment is preferably an oxide containing copper and chromium.

Copper and chromium are preferably contained in a spinel structure. The spinel structure is one of popular crystal structures found in $AB_2O_4$-type double oxide (A and B represent metal elements).

The LDS additive of the first embodiment may contain a trace amount of other metal, besides copper and chromium. Such other metal is exemplified by antimony, tin, lead, indium, iron, cobalt, nickel, zinc, cadmium, silver, bismuth, arsenic, manganese, magnesium and calcium. Manganese is preferred. These metals may exist in the oxide form.

One preferred example of the LDS additive of the first embodiment relates to an LDS additive that contains 10% by mass or less of a metal oxide other than the copper chromium oxide.

A second embodiment of the LDS additive used in this invention relates to an oxide that contains at least either antimony or phosphorus, as well as tin. An oxide that contains antimony and tin is preferred.

The LDS additive of the second embodiment preferably has the tin content larger than the phosphorus and antimony contents, wherein tin preferably accounts for 80% by mass or more of the total content of tin and phosphorus and antimony.

In particular, the LDS additive of the second embodiment is preferably an oxide that contains antimony and tin, more preferably an oxide having the tin content larger than the antimony content, and even more preferably an oxide that contains 80% by mass or more of tin relative to the total of tin and antimony.

More specifically, the LDS additive of the second embodiment is exemplified by antimony-doped tin oxide, antimony oxide-doped tin oxide, phosphorus-doped tin oxide, and phosphorus oxide-doped tin oxide. Antimony-doped tin oxide and antimony oxide-doped tin oxide are preferred, and antimony oxide-doped tin oxide is more preferred. For example, in an LDS additive that contains phosphorus and tin oxide, the phosphorus content is typically 1 to 20% by mass. Meanwhile, in an LDS additive that contains antimony and tin oxide, the antimony content is preferably 1 to 20% by mass. In an LDS additive that contains phosphorus and antimony and tin oxide, the phosphorus content is preferably 0.5 to 10% by mass, and the antimony content is preferably 0.5 to 10% by mass.

A third embodiment of the LDS additive used in this invention preferably contains at least two kinds of metal, and preferably contains an electroconductive oxide having a resistivity of $5 \times 10^3$ $\Omega \cdot$cm or smaller. The resistivity of the electroconductive oxide is preferably $8 \times 10^2$ $\Omega \cdot$cm or smaller, more preferably $7 \times 10^2$ $\Omega \cdot$cm or smaller, and even more preferably $5 \times 10^2$ $\Omega \cdot$cm or smaller. The lower limit value, although not specifically limited, may be $1 \times 10^1$ $\Omega \cdot$cm or larger for example, and even may be $1 \times 10^2$ $\Omega \cdot$cm or larger.

The resistivity of the electroconductive oxide in this invention usually means powder resistivity, and may be measured using "Model 3223" tester from Yokogawa Electric Corporation, in such a way that 10 g of fine powder of electroconductive oxide is packed into a Teflon (registered trademark)-lined cylinder having an inner diameter of 25 mm and pressurized at 100 kgf/cm$^2$ (packing ratio = 20%).

The LDS additive used in the third embodiment, although not specifically limited so long as it contains an electroconductive oxide having a resistivity of $5 \times 10^3$ $\Omega \cdot$cm or smaller, preferably contains at least two kinds of metal, and more specifically contains a metal in Group n (n represents an integer of 3 to 16), and a metal in Group n+1 in the periodic table. n preferably represents an integer of 10 to 13, which is more preferably 12 or 13.

Letting the total content, in the LDS additive, of the Group n (n represents an integer of 3 to 16) metal and the Group n+1 metal in the periodic table be 100 mol%, one metal in the LDS additive used in the third embodiment preferably accounts for 15 mol% or less, which is more preferably 12 mol% or less, and even more preferably 10 mol% or less. The lower limit is preferably, but not specifically limited to, 0.0001 mol% or more. With the contents of two or more kinds of metal controlled within these ranges, the platability will be improved. In this invention, oxide of Group n metal, doped with a Group n+1 metal, is particularly preferred.

In addition in the LDS additive used in the third embodiment, 98% by mass or more of the metal ingredients contained in the LDS additive is preferably composed of the aforementioned Group n metal and the group n+1 metal.

Group n metal in the periodic table is exemplified by those in Group 3 (scandium, yttrium), Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), Group 15 (arsenic, antimony, etc.), and Group 16 (selenium, tellurium, etc.). Among them, Group 12 (n=12) metals are preferred, and zinc is more preferred.

Group n+1 metal in the periodic table is exemplified by those in Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), Group 15 (arsenic, antimony, etc.), and Group 16 (selenium, tellurium, etc.). Among them, Group 13 (n+1=13) metals are preferred, aluminum or gallium are more preferred, and aluminum is even more preferred.

The LDS additive used in the third embodiment may contain a metal other than the electroconductive metal oxide. The metal other than the electroconductive oxide is exemplified by antimony, titanium, indium, iron, cobalt, nickel, cadmium, silver, bismuth, arsenic, manganese, chromium, magnesium, and calcium. These metals may reside in the oxide form. The content of each of these metals is preferably 0.01% by mass or less of the LDS additive.

Among them, the LDS additive in this invention preferably contains at least one of copper, antimony and tin, and more preferably contains copper. Hence the LDS additive of the first embodiment is more preferred.

The LDS additive used in this invention preferably has a number-average particle size of 0.01 to 100 $\mu$m, which is more preferably 0.05 to 30 $\mu$m, and even more preferably 0.05 to 15 $\mu$m. With such average particle size, the plating layer will have a smoother surface.

The content of the LDS additive in the resin composition is preferably 1 to 30 parts by mass per 100 parts by mass of the crystalline thermoplastic resin, more preferably 2 to 25 parts by mass, even more preferably 5 to 20 parts by mass, and yet more preferably 5 to 15 parts by mass. With the content of the LDS additive controlled within these ranges, the obtainable resin molding will have improved platability. Moreover, combination with talc enables formation of the plating layer with only a small content as described later. When two or more kinds of LDS additive are contained, the total content preferably falls within the aforementioned ranges.

<Mold Releasing Agent>

The resin composition of this invention may further contain a mold releasing agent. The mold releasing agent is used principally for improving productivity when the resin composition is molded. The mold releasing agent is exemplified by aliphatic carboxylic amide, aliphatic carboxylic acid, ester formed between aliphatic carboxylic acid and alcohol, aliphatic hydrocarbon compound having a number-average molecular weight of 200 to 15,000, and polysiloxane-based silicone oil.

For details of the mold releasing agent, descriptions in paragraphs [0037] to [0042] of JP-A-2016-196563, and paragraphs [0048] to [0058] of JP-A-2016-078318 may be referred to, the contents of which are incorporated by reference in to this patent specification.

The content of the mold releasing agent, when blended, is preferably 0.001% by mass or more at minimum relative to the resin composition, which is more preferably 0.01% by mass or more, meanwhile preferably 2.0% by mass or less at maximum, which is more preferably 1.5% by mass or less. Within these ranges, mold releasability may be improved, and dies during injection molding may be prevented from being polluted. Only one kind of mold releasing agent may be used, or two or more kinds may be used in a combined manner. When two or more kinds are used, the total content preferably falls within the aforementioned ranges.

<Talc>

The resin composition of this invention may further contain talc. With the talc contained therein, the dimensional stability and appearance of product may be improved, and the plating layer may be grown thereon at higher speed. Blending of talc also successfully improves platability of the resin molding, even with a reduced content of the LDS additive. Talc employed here may be treated on the surface with at least one kind of compound selected from poly(organohydrogen siloxane)s and organopolysilixanes. In this case, the amount of adhesion of siloxane compound on talc is preferably 0.1 to 5% by mass of the talc.

Talc preferably has a number-average particle size of 1 to 50 $\mu$m, which is more preferably 2 to 25 $\mu$m. The average particle size of the talc, usually in the flaky form, is given by the length of the longest part. The number-average particle size of talc is determined by randomly selecting talc particles to be measured regarding the particle size, on an image observed under an electron microscope, and by measuring the particle sizes, and then by averaging the obtained measurement values. Magnification of observation is set to 1,000$\times$, and the number of observed particles is set to 1,000 or more.

The content of the talc, when blended, in the resin composition of this invention is preferably 0.1 to 20 parts by mass, per 100 parts by mass of the crystalline thermoplastic resin.

The content of the talc, when blended, in the resin composition of this invention, also containing the LDS additive, is preferably 1 to 200 parts by mass per 100 parts by mass of the LDS additive, which is more preferably 10 to 150 parts by mass, even more preferably 30 to 120 parts by mass, and yet more preferably 80 to 120 parts by mass. For the talc treated on the surface with a siloxane compound, the content of the siloxane compound-coated talc preferably falls within the aforementioned ranges.

<Other Additives>

The resin composition of this invention may contain still other ingredient other than those described above. Such other ingredient is exemplified by flame retarder, light stabilizer, heat stabilizer, alkali, elastomer, titanium oxide, antioxidant, hydrolysis resistance modifier, matting agent, UV absorber, nucleating agent, plasticizer, dispersion aid, antistatic agent, anti-coloring agent, and colorant. For details of these ingredients, descriptions in paragraphs [0130] to [0155] of JP-B1-4894982 may be referred to, the content of which may be incorporated by reference in to this patent specification. Contents of these ingredients may total 20% by mass or less of the resin composition. Only one kind of these ingredients may be used, or two or more kinds may be used in a combined manner.

<Method for Preparing Resin Composition>

Methods for preparing the resin composition of this invention is a matter of free choice.

According to one exemplary method, the polyamide resin, the reinforcing filler (reinforcing fiber, glass flake), the LDS additive and so forth are mixed using a mixing means such as a V-type blender to prepare an all-in-one blend, the blend is then melt-kneaded and pelletized using a vented extruder. According to another exemplary method known as two-stage kneading, all ingredients excluding the reinforcing filler are preliminarily mixed thoroughly, then melt-kneaded and pelletized using a vented extruder, the obtained pellets are mixed with the reinforcing filler, and the mixture is melt-kneaded using a vented extruder.

According to still another method, all ingredients excluding the reinforcing filler are preliminarily mixed thoroughly using a V-type blender or the like, the preparation is fed through a first chute of a vented twin screw extruder, and the reinforcing filler is fed through a second chute in the middle of the extruder, followed by melt-kneading and pelletizing.

In a preferred arrangement of screws in the kneading zone of the extruder, a kneading-promoting element is placed on the upstream side, and a pressurizing element is placed on the downstream side. The kneading-promoting element is exemplified by forward kneading disk element, cross kneading disk element, wide kneading disk element, and forward mixing screw element.

Heating temperature during melt-kneading may suitably be selected, typically within the range from 180 to 360°C. Too high temperature would make the composition more likely to produce a decomposition gas, which may result in extrusion failure such as broken strands. Hence, a proper choice of screw arrangement which is conscious of shear heating is preferred. Use of an antioxidant and heat stabilizer is recommendable in order to suppress the decomposition during kneading and subsequent molding processes.

<Resin Molding>

This invention also discloses a resin molding obtainable by molding the resin composition of this invention.

The resin composition of this invention, when molded with a thickness of 4 mm, preferably has a flexural strength measured in accordance with ISO 178 of 170 MPa or larger, which is more preferably 180 MPa or larger, and even more preferably 190 MPa or larger. The upper limit of the flexural strength is preferably, but not specifically limited to, 270 MPa or smaller for example, which is practically 260 MPa or smaller, and particularly 250 MPa or smaller.

The resin composition of this invention, when molded with a thickness of 4 mm, preferably has a flexural modulus measured in accordance with ISO 178 of 7.5 GPa or larger, which is more preferably 8.0 GPa or larger, and even more preferably 8.5 GPa or larger. The upper limit of the flexural modulus is preferably, but not specifically limited to, 15 GPa or smaller for example, which is practically 14 GPa or smaller, and particularly 13 GPa or smaller.

The resin composition of this invention, when molded with a thickness of 4 mm, preferably has a notched Charpy impact strength measured in accordance with ISO 179 of 3 $kJ/m^2$ or larger. The upper limit of the notched Charpy impact strength is preferably, but not specifically limited to, 10 $kJ/m^2$ or smaller for example, which is practically smaller than 9 $kJ/m^2$, and particularly 7 $kJ/m^2$ or smaller.

The resin composition of this invention, when molded with a thickness of 4 mm, preferably has an unnotched Charpy impact strength measured in accordance with ISO 179 of 25 $kJ/m^2$ or larger. The upper limit of the unnotched Charpy impact strength is preferably, but not specifically limited to, 50 $kJ/m^2$ or smaller for example, which is practically smaller than 40 $kJ/m^2$, and particularly 39 $kJ/m^2$ or smaller.

The specific gravity, flexural strength, flexural modulus, notched Charpy impact strength and unnotched Charpy impact strength are measured individually according to the methods described later in EXAMPLE.

Method for manufacturing a resin molding in this invention is not specifically limited, and is freely selectable from molding methods commonly used for resin composition. Examples of the methods include injection molding, ultrahigh-speed injection molding, injection compression molding, two-color molding, hollow molding such as gas-assisted molding, molding using heat insulating mold, molding using rapid heating mold, foam molding (including supercritical fluid), insert molding, IMC (in-mold coating), extrusion molding, sheet molding, heat molding, rotational molding, lamination molding, press molding, and blow molding. Also molding method based on a hot runner system is employable.

The resin molding obtainable by molding the resin composition of this invention is advantageously used as a plated resin molding that has a plating layer on the surface thereof. The plating layer on the resin molding of this invention is preferably embodied so that it can perform as an antenna.

<Method for Manufacturing Plated Resin Molding>

Next paragraphs will disclose a method for manufacturing a plated resin molding, which includes a step of forming a plating layer by irradiating laser on the surface of a resin molding obtainable by molding the resin composition of this invention, and then applying a metal.

Fig. 1 is a schematic drawing illustrating a step of forming a plating layer on the surface of a resin molding 1, with the aid of the laser direct structuring technique. Note that the resin molding 1, illustrated to be a flat substrate in FIG. 1, is not always necessarily be flat, but instead may be a resin molding that is partially or entirely curved. The obtainable plated resin molding is not limited to a final product, but may be any of various parts.

Referring now back to FIG. 1, the resin molding 1 is irradiated with laser 2. The laser used here may suitably be selected from known lasers such as YAG laser, excimer laser, and electromagnetic radiation, without special limitation. YAG laser is preferred. Also, the wavelength of laser is not specifically limited. Also, the wavelength is not specifically limited. The wavelength preferably ranges from 200 nm to 1200 nm, and more preferably ranges from 800 to 1200 nm.

Upon being irradiated with laser, the resin molding 1 is activated only in a laser-irradiated area 3. The resin molding 1 in the thus activated state is then dipped in a plating bath 4. The plating bath 4 is selectable from a wide variety of known plating baths without special limitation, which is preferably a plating bath (in particular, electroless plating bath) whose metal component is composed of at least one of copper, nickel, silver, gold, or palladium; more preferably a plating bath (in particular, electroless plating bath) that contains at least one species selected from copper, nickel, silver and gold; and even more preferably a plating bath (in particular, electroless plating bath) that contains copper. In short, the metal component of the plating layer in this invention is preferably composed of at least one species selected from the metals described above.

Method of dipping the resin molding 1 in the plating bath 4 is exemplified, but again not specifically limited to, a method by which the resin molding 1 is placed in a liquid which is a blend of plating solution. The resin molding after being dipped in the plating bath will have a plating layer 5 formed only in the laser-irradiated area.

According to the method of this invention, a plating layer (circuit) having intervals of 1 mm or narrower, and even 150 μm or narrower (the lower limit is typically, but not specifically limited to, 30 μm or wider) may be formed. In order to prevent corrosion or degradation of the thus formed plating layer (circuit), for example the electroless plating may be followed by further protection with nickel or gold. Alternatively, the electroless plating may be followed by electroplating for the same purpose, to thereby obtain a necessary thickness within a short time.

The method for manufacturing the plated resin molding is preferably employed as a method for manufacturing an antenna-equipped portable electronic device part, which includes the method for manufacturing the plated resin molding.

The resin molding obtainable from the resin composition of this invention may be used for various applications including electronic parts (in particular, portable electronic device parts) such as connector, switch, relay and conductive circuit.

For other aspects, references may be made on the descriptions of JP-A-2011-219620, JP-A-2011-195820, JP-A-2011-178873, JP-A-2011-168705 and JP-A-2011-148267, without departing from the spirit of this invention.

EXAMPLE

This invention will further be detailed referring to Examples. All materials, amounts of consumption, ratios, process details and procedures described in Examples below may suitably be modified, without departing from the spirit of this invention. Hence, the scope of this invention is by no means limited to specific Examples below.

Polyamide resin: PXD10, obtained by the synthetic method below, was used.

<Exemplary Synthesis of Crystalline Thermoplastic Resin (PXD10)>

Into a 50-liter (internal volume) reactor equipped with a stirrer, a partial condenser, a cooler, a thermometer, a dropping device, a nitrogen feeding tube and a strand die, placed were 8950 g (44.25 mol) of sebacic acid (Sebacic acid TA, from Itoh Oil Chemicals Co., Ltd.), 12.54 g (0.074 mol) of calcium hypophosphite, and 6.45 g (0.079 mol) of sodium acetate, all being precisely weighed. The inside of the reactor was thoroughly replaced with nitrogen gas, pressurized with nitrogen gas up to 0.4 MPa, the content was heated from 20°C to 190°C under stirring, to thereby uniformly melt sebacic acid over 55 minutes. Next, 5960 g (43.76 mol) of paraxylylenediamine (from Mitsubishi Gas Chemical Inc.) was added dropwise under stirring over 110 minutes. During the process, the internal temperature of the reactor was continuously elevated up to 293°C. During the dropwise addition, the pressure was controlled to 0.42 MPa, while eliminating the produced water through the partial condenser and the cooler out of the system. Temperature of the partial condenser was controlled within the range from 145 to 147°C. After the dropwise addition of paraxylylenediamine, polycondensation was allowed to continue for 20 minutes, while keeping the internal pressure of reactor at 0.42 MPa. During the process, the internal temperature of reactor elevated up to 296°C. The internal pressure of reactor was then reduced from 0.42 MPa down to 0.12 MPa over 30 minutes. During the process, the internal temperature elevated up to 298°C. The pressure was then reduced at a rate of 0.002 MPa/min, down to 0.08 MPa over 20 minutes, to thereby control the content of components having molecular weights of 1,000 or smaller. The internal temperature of reactor, upon completion of the pressure reduction, was found to be 301°C. The system was then pressurized with nitrogen gas, the polymer was taken out in the form of strands through the strand die at an internal reactor temperature of 301°C, and a resin temperature of 301°C, the strands were cooled in cooling water at 20°C, and pelletized, to obtain approximately 13 kg of polyamide resin. The cooling time in cooling water was set to 5 seconds, and the take-up speed of strands was set to 100 m/min. The polyamide resin will be referred to as "PXD10".

Saturated water absorption after immersion in water, measured according to a method described later, was found to be 3.0% by mass.

<Method for Measuring Saturated Water Absorption of Polyamide Resin after Immersion in Water>

A 100 mm × 100 mm plate specimen of 2 mm thick was immersed in hot water at 80°C, and weighed every 24 hours. Moisture on the surface of the plate, when measured, was thoroughly blown by air. Immersion was terminated upon confirming that the weight would no more change, and percentage of change relative to the initial mass was calculated to determine the saturated water absorption.

```
[Mathematical Formula 1]
(Saturated water absorption: %) = [(Mass measured after saturated
  water absorption) - (Initial mass)]/(Initial mass) × 100
```

14

5007: Polybutylene terephthalate resin (PBT): "Novaduran 5008-C", from Mitsubishi Engineering-Plastics Corporation

5605: IPA-PBT (copolymerized with isophthalate): "Novaduran 5605", from Mitsubishi Engineering-Plastics Corporation 1010X: Polyamide 6 (PA6), from Ube Industries, Ltd.

LDS additive:

Black 1G: Copper chromium oxide ($CuCr_2O_4$), from Shepherd Color Japan, Inc.
CP-5C: Antimony-doped tin oxide, from Keeling & Walker, Ltd.
23K: Aluminum-doped zinc oxide, from Hakusui Tech Co., Ltd., resistivity (product standard) = 100 to 500 $\Omega \cdot$cm

Reinforcing fiber:

T-756H: E-glass, from Nippon Electric Glass Co., Ltd., glass fiber, urethane-based sizing agent, cut length (number-average fiber length) = 3 mm, number-average fiber diameter = 10 $\mu$m, the glass fiber having a circular cross section
T-127: E-glass, from Nippon Electric Glass Co., Ltd., glass fiber, chopped strand, number-average fiber diameter = 13 $\mu$m, cut length (number-average fiber length) = 3 mm, the glass fiber having a circular cross section

Glass flake:
Fleka REFG313: from Nippon Sheet Glass Co., Ltd. (5 $\mu$m thick) Fine flake 6145: from Nippon Sheet Glass Co., Ltd., (0.7 $\mu$m thick)

Mold releasing agent:

CS8CP: Calcium montanate, from Nitto Chemical Industry Co., Ltd.
PED522: Oxidized polyethylene wax, from Clariant Chemicals

Talc:
MW (Micron White) 5000S: from Hayashi Kasei Co., Ltd., average diameter = 4.7 $\mu$m

Examples 1 to 6, Comparative Examples 1 to 7

<Compound>

The individual ingredients were precisely weighed according to chemical compositions summarized in Table 1 below, all components but excluding the glass fiber and the glass flake were blended using a tumbler, fed from the base of a twin screw extruder (TEM26SS, from Toshiba Machine Co., Ltd.), the content was melted, to which the glass fiber and the glass flake were fed from the side, to thereby manufacture resin pellets. The temperature of the twin screw extruder was set to 300°C, except for Example 6 and Comparative Example 7 where the temperature of the twin screw extruder was set to 260°C.

<Flexural Strength and Flexural Modulus>

The pellets manufactured by the aforementioned method were dried at 70°C for 3 hours, and subjected to injection molding using an injection molding machine ("EC75SX",from Toshiba Machine Co., Ltd.), at a cylinder temperature of 300°C, a mold temperature of 130°C, and a molding cycle of 50 seconds, to thereby manufacture an ISO tensile test specimen (4 mm thick), except for Example 6 and Comparative Example 7 where the cylinder temperature was set to 260°C, the mold temperature was set to 120°C, and the molding cycle was set to 50 seconds.

The ISO tensile test specimen (4 mm thick) was measured regarding flexural strength (in MPa) and flexural modulus (in GPa), in accordance with ISO 178 at 23°C.

<Charpy Impact Strength>

The pellets manufactured by the aforementioned method were dried at 70°C for 3 hours, and subjected to injection molding using an injection molding machine ("EC75SX", from Toshiba Machine Co., Ltd.), at a cylinder temperature of 300°C, a mold temperature of 130°C, and a molding cycle of 50 seconds, to thereby manufacture an ISO tensile test specimen (4 mm thick), except for Example 6 and Comparative Example 7 where the cylinder temperature was set to 260°C, the mold temperature was set to 120°C, and the molding cycle was set to 50 seconds.

Charpy impact strengths (notched and unnotched) were measured in accordance with ISO 179.

<Evaluation of Warpage>

The pellets manufactured by the aforementioned method were dried at 70°C for 3 hours, and subjected to injection molding using an injection molding machine ("EC75SX", from Toshiba Machine Co., Ltd.), at a cylinder temperature of 300°C, a mold temperature of 130°C, and a molding cycle of 50 seconds, to thereby manufacture a plate specimen that measures 60 mm×60 mm× 2 mm thick. Amount of warp of the obtained molding was measured to evaluate the warpage. The amount of warp of the obtained molding was also measured after annealed under the conditions below. Exceptionally in Example 6 and Comparative Example 7, the cylinder temperature was set to 260°C, the mold temperature was set to 120°C, and the molding cycle was set to 50 seconds, to thereby mold a plate specimen that measures 100 mm×100 mm×2 mm thick.

Annealing conditions include use of a surface far-infrared heater set to 300°C, and heating of the obtained specimen for 90 seconds. Thermography of the specimen indicated that the surface temperature of the specimen reached 270°C at maximum. Exceptionally in Example 6 and Comparative Example 7, a hot air oven set to 140°C was used to heat the obtained specimen for 12 hours.

The plate specimen *per* se was scanned under a 3D measuring system VR-3000 from Keyence Corporation, and the amount of warp was calculated from a difference between the detected maximum height and minimum height.

The amount of change was defined to indicate difference between the amount of warp after annealing and the amount of warp before annealing.

<Appearance of Plating Layer>

The pellets manufactured by the aforementioned method were dried at 70°C for 3 hours, and subjected to injection molding using an injection molding machine ("EC75SX", from Toshiba Machine Co., Ltd.), at a cylinder temperature of 300°C, a mold temperature of 130°C, and a molding cycle of 50 seconds, to thereby manufacture a plate specimen of 3 mm thick. Exceptionally in Example 6 and Comparative Example 7, the cylinder temperature was set to 260°C, the mold temperature was set to 120°C, and the molding cycle was set to 50 seconds.

The obtained plate was irradiated with YAG laser with a wavelength of 1064 nm, at an output of 10 W, a speed of 80 m/s, and a frequency of 3 $\mu$s. The specimen was degreased with sulfuric acid, then treated with THP alkali activator and THP alkali accelerator from Kizai Corporation, and plated with copper using SEL copper from Kizai Corporation. Evaluation criteria are as follows:

A: plated;
B: not plated.

[Table 1-1]

| | | | Example 1 | Example 2 | Comparative Example 1 | Comparative Example 2 | Comparative Example 3 | Comparative Example 4 |
|---|---|---|---|---|---|---|---|---|
| Crystalline thermoplastic resin | PXD10 | | 100.0 | 100.0 | 100.0 | 100.0 | 100.0 | 100.0 |
| | 5007 | | | | | | | |
| | 5605 | | | | | | | |
| | 1010X | | | | | | | |
| LDS additive | Black1G | | | | | | | |
| | CP-5C | | | | | | | |
| | 23K | | | | | | | |
| Reinforcing fiber | T-756H | | 14.5 | 33.8 | 43.4 | 14.5 | 28.9 | |
| | T-127 | | | | | | | |
| Glass flake | Fleka REFG313 | 5μmthick | | | | 28.9 | | |
| | Fine flake 6145 | 0.7μmthick | 28.9 | 33.8 | | | 14.5 | 43.4 |
| | | | | | | | | |
| Mold Releasing Agent | CS-8CP | | 0.4 | 0.5 | 0.4 | 0.4 | 0.4 | 0.4 |
| | PED522 | | | | | | | |
| Talc | MW5000S | | 0.7 | 0.8 | 0.7 | 0.7 | 0.7 | 0.7 |
| Reinforcing fiber/Glass flake | | | 0.5 | 1 | | 0.5 | 2 | |
| Flexural strength | | MPa | 230 | 245 | 254 | 166 | 250 | 125 |
| Flexural modulus | | GPa | 9.0 | 12.6 | 9.6 | 7.3 | 9.4 | 6.5 |
| Notched Charpy impact strength | | $kJ/m^2$ | 4 | 6 | 9 | 4 | 7 | 2 |
| Unnotched Charpy impact strength | | $kJ/m^2$ | 38 | | 40 | 16 | 39 | 8 |

(continued)

| Warpage(3D measuring system difference of elevation) | | mm | Example 1 | Example 2 | Comparative Example 1 | Comparative Example 2 | Comparative Example 3 | Comparative Example 4 |
|---|---|---|---|---|---|---|---|---|
| | Warp before annealing | | 0.08 | 0.09 | 0.14 | 0.10 | 0.12 | 0.08 |
| | Warp after annealing | | 0.18 | 0.21 | 0.58 | 0.35 | 0.32 | 0.10 |
| | Amount of change | | 0.10 | 0.12 | 0.44 | 0.25 | 0.20 | 0.02 |
| Appearance of Plating Layer | | | | | | | | |

[Table 1-2]

| | | | Example 3 | Example 4 | Example 5 | Comparative Example 5 | Comparative Example 6 | Example 6 | Comparative Example 7 |
|---|---|---|---|---|---|---|---|---|---|
| Crystalline thermoplastic resin | PXD10 | | 100.0 | 100.0 | 100.0 | 100.0 | 100.0 | | |
| | 5007 | | | | | | | 30.0 | 30.0 |
| | 5605 | | | | | | | 30.0 | 30.0 |
| | 1010X | | | | | | | 40.0 | 40.0 |
| LDS additive | Black1G | | 8.4 | | | 8.4 | 8.4 | 13.5 | 13.5 |
| | CP-5C | | | 8.4 | | | | | |
| | 23K | | | | 8.4 | | | | |
| Reinforcing fiber | T-756H | | 16.8 | 16.8 | 16.8 | 50.3 | 16.8 | | |
| | T-127 | | | | | | | 16.9 | 50.7 |
| Glass flake | Fleka REFG313 | 5μm thick | | | | | 33.5 | | |
| | Fine flake 6145 | 0.7μm thick | 33.5 | 33.5 | 33.5 | | | 33.8 | |
| | | | | | | | | | |
| Mold Releasing Agent | CS-8CP | | 0.5 | 0.5 | 0.5 | 0.5 | 0.5 | | |
| | PED522 | | | | | | | 0.3 | 0.3 |
| Talc | MW5000S | | 8.4 | 8.4 | 8.4 | 8.4 | 8.4 | | |
| Reinforcing fiber/Glass flake | | | 0.5 | 0.5 | 0.5 | | 0.5 | 0.5 | |
| Flexural strength | | MPa | 193 | 195 | 196 | 206 | 166 | 150 | 181 |
| Flexural modulus | | GPa | 10.6 | 10.5 | 10.5 | 10.6 | 9.5 | 7.3 | 10.1 |
| Notched Charpy impact strength | | kJ/m$^2$ | 2 | 2 | 2 | 4 | 2 | 3 | 4 |
| Unnotched Charpy impact strength | | kJ/m$^2$ | 31 | 30 | 29 | 31 | 20 | - | - |

| | | | Example 3 | Example 4 | Example 5 | Comparative Example 5 | Comparative Example 6 | Example 6 | Comparative Example 7 |
|---|---|---|---|---|---|---|---|---|---|
| Warpage(3D measuring system difference of elevation) | Warp before annealing | mm | 0.07 | 0.09 | 0.08 | 0.12 | 0.10 | 0.60 | 0.82 |
| | Warp after annealing- | | 0.20 | 0.21 | 0.22 | 0.55 | 0.32 | 0.67 | 1.24 |
| | Amount of change | | 0.12 | 0.12 | 0.14 | 0.43 | 0.22 | 0.07 | 0.43 |
| Appearance of Plating Layer | | - | A | B | B | A | A | A | A |

As clearly known from the results above, the resin compositions of this invention were found to yield the resin moldings showing small warp after annealing, as a result of blending of the glass fiber as the reinforcing filler with the glass flake having a predetermined thickness according to predetermined ratios (Examples 1 to 7). The resin moldings were also found to excel in mechanical strength. The resin moldings, when blended with the LDS additive (Examples 3 to 6), were also found to allow the plating layer to be formed thereon, while successfully keeping small warp and high mechanical strength even after heating.

In contrast, the resin moldings free of glass flake were found to warp largely after heating (Comparative Examples 1, 5 and 7). Even with the glass fiber and the glass flake blended according to predetermined ratios, the resin moldings were found to warp largely after heating if the thickness of glass flake fell outside the predetermined range (Comparative Examples 2 and 6). Also mechanical strength were found to be considerably poor. Even with the glass fiber and the glass flake having the predetermined thickness blended therein, the resin molding was again found to warp largely after heating if the ratio of blending fell outside the predetermined range (Comparative Example 3). Meanwhile, without blending the glass fiber, the resin molding showed small warp after heating, but poor mechanical strength (Comparative Example 4).

REFERENCE SIGNS LIST

1 resin molding
2 laser
3 laser-irradiated area
4 plating bath
5 plating layer

**Claims**

1. A thermoplastic resin composition containing 10 to 100 parts by mass of a reinforcing filler, per 100 parts by mass of a crystalline thermoplastic resin,

   wherein the crystalline thermoplastic resin contains a polybutylene terephthalate resin and/or a polyamide resin;
   the reinforcing filler contains a reinforcing fiber and a glass flake having a thickness of 0.1 to 2 $\mu$m;
   the reinforcing fiber/glass flake, which is mass ratio of the reinforcing fiber and the glass flake, falls into 0.1 to 1; and
   the polybutylene terephthalate resin and the polyamide resin account for 85% by mass or more, preferably 90% by mass or more, even more preferably 95% by mass or more, of a resin component contained in the thermoplastic resin composition.

2. The thermoplastic resin composition of Claim 1, wherein the crystalline thermoplastic resin contains a polyamide resin.

3. The thermoplastic resin composition of Claim 2, wherein the polyamide resin is a semi-aromatic polyamide resin.

4. The thermoplastic resin composition of Claim 2,
   wherein the polyamide resin is composed of a diamine-derived structural unit and a dicarboxylic acid-derived structural unit, 50 mol% or more of the diamine-derived structural unit is derived from xylylenediamine, and 50 mol% or more of the dicarboxylic acid-derived structural unit is derived from a straight chain aliphatic $\alpha,\omega$-dicarboxylic acid having 4 to 20 carbon atoms.

5. The thermoplastic resin composition of Claim 4, wherein 50 mol% or more of the dicarboxylic acid-derived structural unit is derived from sebacic acid.

6. The thermoplastic resin composition of Claim 4 or 5, wherein 50 mol% or more of the diamine-derived structural unit is derived from paraxylylenediamine.

7. The thermoplastic resin composition of Claim 4, wherein 70 mol% or more of the dicarboxylic acid-derived structural unit is derived from sebacic acid, and 70 mol% or more of the diamine-derived structural unit is derived from paraxylylenediamine.

8. The thermoplastic resin composition of any one of Claims 2 to 7, wherein 90% by mass or more of the polyamide resin is a polyamide resin having a saturated water absorption, measured after immersion in water, of 4.0% by mass or smaller.

9. The thermoplastic resin composition of any one of Claims 1 to 8, wherein the reinforcing fiber contains a glass fiber.

10. The thermoplastic resin composition of any one of Claims 1 to 9, further containing 0.1 to 20 parts by mass of talc, per 100 parts by mass of the crystalline thermoplastic resin.

11. The thermoplastic resin composition of any one of claims 1 to 10, further containing at least one selected from the group consisting of a flame retarder, a light stabilizer, a heat stabilizer, an alkali, an elastomer, a titanium oxide, an antioxidant, a hydrolysis resistance modifier, a matting agent, a UV absorber, nucleating agent, a plasticizer, a dispersion aid, an antistatic agent, am anti-coloring agent, and a colorant.

12. The thermoplastic resin composition of any one of claims 1 to 10, further containing a heat stabilizer.

13. The thermoplastic resin composition of Claim 2,
wherein the polyamide resin is a terephthalate-based polyamide resin, and/or xylylenediamine-based polyamide resin.

14. A resin molding formed of the thermoplastic resin composition described in any one of Claims 1 to 12.

**Patentansprüche**

1. Thermoplastische Harzzusammensetzung, die 10 bis 100 Massenteile Verstärkungsfüllstoff pro 100 Massenteile eines kristallinen thermoplastischen Harzes enthält,

wobei das kristalline thermoplastische Harz ein Polybutylenterephthalatharz und/oder ein Polyamidharz enthält; der Verstärkungsfüllstoff eine Verstärkungsfaser und ein Glas-Flake mit einer Dicke von 0,1 bis 2 $\mu$m enthält; das Verstärkungsfaser/Glas-Flake, welches das Massenverhältnis zwischen der Verstärkungsfaser und dem Glas-Flake ist, in 0,1 bis 1 fällt; und
das Polybutylenterephthalatharz und das Polyamidharz 85 Massen % oder mehr, bevorzugt 90 Massen % oder mehr, noch bevorzugter 95 Massen % oder mehr, einer in der thermoplastischen Harzzusammensetzung enthaltenen Harzkomponente ausmachen.

2. Thermoplastische Harzzusammensetzung nach Anspruch 1, wobei das kristalline thermoplastische Harz ein Polyamidharz enthält.

3. Thermoplastische Harzzusammensetzung nach Anspruch 2, wobei das Polyamidharz ein halbaromatisches Polyamidharz ist.

4. Thermoplastische Harzzusammensetzung nach Anspruch 2,
wobei das Polyamidharz aus einer von Diamin abgeleiteten Struktureinheit und einer von Dicarbonsäure abgeleiteten Struktureinheit besteht, 50 Mol % oder mehr der von Diamin abgeleiteten Struktureinheit von Xylylendiamin abgeleitet sind und 50 Mol % oder mehr der von Dicarbonsäure abgeleiteten Struktureinheit von einer geradkettigen aliphatischen $\alpha,\omega$-Dicarbonsäure mit 4 bis 20 Kohlenstoffatomen abgeleitet sind.

5. Thermoplastische Harzzusammensetzung nach Anspruch 4, wobei 50 Mol % oder mehr der von Dicarbonsäure abgeleiteten Struktureinheit von Sebacinsäure abgeleitet sind.

6. Thermoplastische Harzzusammensetzung nach Anspruch 4 oder 5, wobei 50 Mol % oder mehr der von Diamin abgeleiteten Struktureinheit von Paraxylylendiamin abgeleitet sind.

7. Thermoplastische Harzzusammensetzung nach Anspruch 4, wobei 70 Mol % oder mehr der von Dicarbonsäure abgeleiteten Struktureinheit von Sebacinsäure abgeleitet sind und 70 Mol % oder mehr der von Diamin abgeleiteten Struktureinheit von Paraxylylendiamin abgeleitet sind.

**8.** Thermoplastische Harzzusammensetzung nach einem der Ansprüche 2 bis 7, wobei 90 Massen % oder mehr des Polyamidharzes ein Polyamidharz mit einer gesättigten Wasserabsorption, gemessen nach dem Eintauchen in Wasser, von 4,0 Massen % oder kleiner sind.

**9.** Thermoplastische Harzzusammensetzung nach einem der Ansprüche 1 bis 8, wobei die Verstärkungsfaser eine Glasfaser enthält.

**10.** Thermoplastische Harzzusammensetzung nach einem der Ansprüche 1 bis 9, die ferner 0,1 bis 20 Massenteile Talk pro 100 Massenteile des kristallinen thermoplastischen Harzes enthält.

**11.** Thermoplastische Harzzusammensetzung nach einem der Ansprüche 1 bis 10, die ferner mindestens eines enthält, das ausgewählt ist aus der Gruppe bestehend aus einem Flammenschutzmittel, einem Lichtstabilisator, einem Wärmestabilisator, einem Alkali, einem Elastomer, einem Titanoxid, einem Antioxidationsmittel, einem Hydrolysebeständigkeitsmodifikator, einem Mattierungsmittel, einem UV-Absorber, einem Nukleierungsmittel, einem Weichmacher, einer Dispersionshilfe, einem Antistatikum, einem Antifärbemittel und einem Farbstoff.

**12.** Thermoplastische Harzzusammensetzung nach einem der Ansprüche 1 bis 10, die ferner einen Wärmestabilisator enthält.

**13.** Thermoplastische Harzzusammensetzung nach Anspruch 2, wobei das Polyamidharz ein Polyamidharz auf Terephthalatbasis und/oder ein Polyamidharz auf Xylylendiaminbasis ist.

**14.** Harzformteil, gebildet aus der thermoplastischen Harzzusammensetzung, die in einem der Ansprüche 1 bis 12 beschrieben ist.

## Revendications

**1.** Composition de résine thermoplastique contenant 10 à 100 parties en masse d'une charge renforçante, pour 100 parties en masse d'une résine thermoplastique cristalline,

dans laquelle la résine thermoplastique cristalline contient une résine téréphtalate de polybutylène et/ou une résine polyamide ;
la charge renforçante contient une fibre de renforcement et un flocon de verre ayant une épaisseur de 0,1 à 2 $\mu$m ;
le rapport fibre de renforcement/flocon de verre, qui est le rapport massique de la fibre de renforcement et du flocon de verre, va de 0,1 à 1 ; et
la résine téréphtalate de polybutylène et la résine polyamide représentent 85 % en masse ou plus, de préférence 90 % en masse ou plus, même plus préférablement 95 % en masse ou plus, d'un composant de résine contenu dans la composition de résine thermoplastique.

**2.** Composition de résine thermoplastique selon la revendication 1, dans laquelle la résine thermoplastique cristalline contient une résine polyamide.

**3.** Composition de résine thermoplastique selon la revendication 2, dans laquelle la résine polyamide est une résine polyamide semi-aromatique.

**4.** Composition de résine thermoplastique selon la revendication 2, dans laquelle la résine polyamide est composée d'un motif structural dérivé de diamine et d'un motif structural dérivé d'acide dicarboxylique, 50 % molaires ou plus du motif structural dérivé de diamine est dérivé de xylylènediamine, et 50 % molaires ou plus du motif structural dérivé d'acide dicarboxylique est dérivé d'un acide $\alpha,\omega$-dicarboxylique aliphatique à chaîne linéaire ayant 4 à 20 atomes de carbone.

**5.** Composition de résine thermoplastique selon la revendication 4, dans laquelle 50 % molaires ou plus du motif structural dérivé d'acide dicarboxylique est dérivé d'acide sébacique.

**6.** Composition de résine thermoplastique selon la revendication 4 ou 5, dans laquelle 50 % molaires ou plus du motif structural dérivé de diamine est dérivé de paraxylylènediamine.

7. Composition de résine thermoplastique selon la revendication 4, dans laquelle 70 % molaires ou plus du motif structural dérivé d'acide dicarboxylique est dérivé d'acide sébacique, et 70 % molaires ou plus du motif structural dérivé de diamine est dérivé de paraxylylènediamine.

8. Composition de résine thermoplastique selon l'une quelconque des revendications 2 à 7, dans laquelle 90 % en masse ou plus de la résine polyamide est une résine polyamide ayant une absorption d'eau saturée, mesurée après immersion dans de l'eau, de 4,0 % en masse ou plus petite.

9. Composition de résine thermoplastique selon l'une quelconque des revendications 1 à 8, dans laquelle la fibre de renforcement contient une fibre de verre.

10. Composition de résine thermoplastique selon l'une quelconque des revendications 1 à 9, contenant en outre 0,1 à 20 parties en masse de talc, pour 100 parties en masse de la résine thermoplastique cristalline.

11. Composition de résine thermoplastique selon l'une quelconque des revendications 1 à 10, contenant en outre au moins un choisi dans le groupe constitué d'un retardateur de flamme, d'un agent stabilisant à la lumière, d'un agent stabilisant thermique, d'un alcali, d'un élastomère, d'un oxyde de titane, d'un antioxydant, d'un agent modifiant la résistance à l'hydrolyse, d'un agent de matité, d'un absorbeur d'UV, d'un agent de nucléation, d'un plastifiant, d'un adjuvant de dispersion, d'un agent antistatique, d'un agent anti-coloration, et d'un colorant.

12. Composition de résine thermoplastique selon l'une quelconque des revendications 1 à 10, contenant en outre un agent stabilisant thermique.

13. Composition de résine thermoplastique selon la revendication 2, dans laquelle la résine polyamide est une résine polyamide à base de téréphtalate, et/ou une résine polyamide à base de xylylènediamine.

14. Moulage de résine formé de la composition de résine thermoplastique décrite dans l'une quelconque des revendications 1 à 12.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008119603 A
- JP 2017014388 A
- JP 2015048440 A
- JP 2011132550 A
- JP 2016196563 A
- JP 2016078318 A

- JP 4894982 B
- JP 2011219620 A
- JP 2011195820 A
- JP 2011178873 A
- JP 2011168705 A
- JP 2011148267 A